# EUROPÄISCHE PATENTSCHRIFT

(11) **EP 4 286 263 B1**
(45) Veröffentlichungstag und Bekanntmachung des Hinweises auf die Patenterteilung: **09.04.2025**
(21) Anmeldenummer: 23171645.7
(22) Anmeldetag: 04.05.2023
(51) Int. Cl.: B62K 27/12, B62K 13/02

(54) **VORRICHTUNG ZUM SCHLEPPEN EINES SCHLEPPFAHRRADS MIT EINEM ZUGFAHRRAD**
DEVICE FOR TOWING A TOWING BICYCLE WITH A TOWING BICYCLE
DISPOSITIF DE REMORQUAGE D'UNE BICYCLETTE DE REMORQUAGE AVEC UNE BICYCLETTE DE TRACTION

(30) Priorität: 01.06.2022 AT 503882022
(43) Veröffentlichungstag der Anmeldung: 06.12.2023
(73) Patentinhaber: Dorr, Christian, 3970 Weitra (AT); Dorr, Petra, 3970 Weitra (AT)
(72) Erfinder: Dorr, Christian, 3970 Weitra (AT); Dorr, Petra, 3970 Weitra (AT)
(74) Vertreter: Hübscher & Partner Patentanwälte GmbH

(56) Entgegenhaltungen:
- EP-A2- 1 138 589
- DE-C1- 10 159 547
- DE-U1- 9 313 520
- GB-A- 2 280 410
- GB-A- 2 368 325
- NL-B1- 1 041 126
- US-A1- 2015 266 537

## Beschreibung

Die Erfindung bezieht sich auf eine Vorrichtung zum Schleppen eines Schleppfahrrads mit einem Zugfahrrad, umfassend eine Rahmenbefestigung für das Zugfahrrad und einen mit der Rahmenbefestigung verbundenen Träger, der einen Nabenhalter für die Vorderradnabe des Schleppfahrrads umfasst.

Der Stand der Technik kennt eine Vielzahl an Vorrichtungen zum Schleppen eines Schleppfahrrades mit einem Zugfahrrad, bei denen die Vorrichtung auf das Zugfahrrad montiert wird, um das Schleppfahrrad ohne Fahrer zu schleppen. Die gattungsgemäße DE10159547C1 zeigt eine solche Vorrichtung, die im Bereich der hinteren Radnabe des Zugfahrrads befestigt ist und eine gegen die Zugrichtung geöffnete Gabel aufweist. Das zu schleppende Kinderfahrrad weist an der Vorderradnabe angebrachte Befestigungsmuttern auf, die in an den Endabschnitten der Gabel angeordneten verschließbaren Schellen formschlüssig eingelegt werden können. In dieser Schleppstellung ist das Kinderfahrrad über die Vorderradnabe arretiert, wobei sich das Vorderrad nach wie vor innerhalb der Gabel frei drehen kann.

Nachteilig am Stand der Technik ist allerdings einerseits, dass das zu schleppende Rad mit den Befestigungsmuttern ausgestattet werden muss, und andererseits, dass die Schellen über Schrauben oder andere Befestigungsmittel festgelegt werden müssen, um das Schleppfahrrad schleppen zu können. Dadurch muss im Vorhinein bekannt sein, welches Rad geschleppt werden soll und ein kurzfristiges Schleppen, beispielsweise bei einem Unfall, ist nicht möglich. Dazu muss nämlich einerseits das zu schleppende Fahrrad zuerst umgerüstet werden und andererseits das benötigte Werkzeug zum Schließen der Befestigungsmuttern mitgeführt werden. Zwar offenbart die DE10159547C1 Ausführungsformen, bei denen die Schellen händisch verschlossen werden können, jedoch ist fraglich, ob insbesondere in einer Stresssituation, wie beispielsweise starkem Verkehr oder einem Unfall, die Schellen dadurch sicher vom Benutzer verschlossen werden können.

Der Erfindung liegt somit die Aufgabe zugrunde, ein sicheres Schleppen eines Schleppfahrrads ohne dessen Modifikation zu ermöglichen, wobei die Schleppstellung möglichst einfach hergestellt werden kann und die Fahrsicherheit beim Schleppen möglichst wenig beeinträchtigt wird.

Die Erfindung löst die gestellte Aufgabe dadurch, dass der Träger eine Reifenauflage für den Reifen des Vorderrades des Schleppfahrrads bildet und der Nabenhalter eine Nabenauflage für die Vorderradnabe und einen die Vorderradnabe auf der der Reifenauflage abgewandten Seite hintergreifenden Nabenanschlag umfasst. Zufolge dieser Maßnahmen wird das Vorderrad des Schleppfahrrads angehoben und so angeordnet, dass es an drei Punkten an der Vorrichtung abgestützt ist: Eine Abstützung erfolgt durch den Nabenhalter auf der der Reifenauflage abgewandten Seite, also vom Fahrer eines Zugfahrrads betrachtet, hinter der Vorderradnabe. Die zweite Abstützung erfolgt unterhalb der Vorderradnabe, da diese auf der Nabenauflage aufliegt, womit der Vorderreifen keinen Bodenkontakt mehr herstellt. Und die dritte Abstützung erfolgt an der Reifenauflage, gegen die der Vorderreifen festgelegt wird. Dadurch wird das Schleppfahrrad auch beim Schleppen angehoben und gegen sowohl in als auch gegen die Fahrtrichtung wirkende Kräfte abgestützt. Der Nabenhalter ist von der Reifenauflage so beabstandet, dass der Vorderreifen aufgrund seiner runden Form und der wirkenden Gravitation zwischen dem Nabenhalter und der Reifenauflage festgelegt wird, wodurch auch eine unbeabsichtigte Verlagerung des Schleppfahrrads in eine andere Richtung behindert wird. Je nach seiner Deformierbarkeit kann der Vorderreifen bei diesem erfindungsgemäßen Festlegen im Bereich der Reifenauflage mehr oder weniger stark elastisch zusammengedrückt werden und übt eine Gegenkraft auf die Reifenauflage aus, die die Festlegeposition weiter stabilisiert. Durch das Festlegen kann die Lenkstange des Schleppfahrrads nicht unabhängig vom Zugfahrrad bewegt werden sodass das Schleppfahrad beim Kurvenfahren nicht verkippen und dadurch keine Taumelbewegung beim Zugfahrrad auslösen kann. Allerdings kann das Schleppfahrrad einer Richtungsänderung des Zugfahrrads automatisch folgen, da nur das Vorderrad, aber nicht die Lenkung festgelegt ist. Die Vorrichtung wird bevorzugter Weise so am Rahmen des Zugfahrrads angeordnet, dass der Schwerpunkt des Schleppfahrrads möglichst niedrig liegt, aber ein gefahrloses Kurvenfahren des Zugfahrrads noch gewährleistet ist. Der Nabenhalter kann im einfachsten Fall ein vom Träger aufragender Bolzen sein, sodass das Schleppfahrrad einfach von oben entlang der Längsachse des Bolzens in die Vorrichtung eingehängt werden kann.

Zwar wird unerwünschtes seitliches Verrutschen des Vorderrads des Schleppfahrrads durch die Festlegung des Vorderrads bereits weitgehend unterbunden, allerdings kann ein seitliches Verrutschen aus der Vorrichtung verhindert werden, wenn der Träger im Bereich der Reifenauflage eine Gabel zum seitlichen Festlegen des Vorderrades des Schleppfahrrads bildet. Dabei bildet die Gabelbasis die Reifenauflage von der aus die Gabelarme in Richtung des Vorderrads des Schleppfahrrades verlaufen. Sollte sich das Vorderrad also aufgrund externer Kräfte verdrehen, dienen die Gabelarme als seitlicher Anschlag um die Auslenkung dieser Drehbewegung zu begrenzen. Da das wirkende Moment im Vorderrad im Bereich des Vorderreifens am höchsten ist, muss der Träger nur im Bereich der Reifenauflage eine erfindungsgemäße Gabel bilden, um das Vorderrad seitlich festzulegen.

Um das seitliche Verrutschen des Vorderreifens aus der Vorrichtung zu verhindern und gleichzeitig das Gewicht der Vorrichtung möglichst gering zu halten, kann die Gabel zwei Gabelarme aufweisen, wobei die Länge des den Nabenhalter umfassenden Gabelarms die Länge des anderen Gabelarms um wenigstens das Doppelte übersteigt. Der Nabenhalter wird auf dem langen Arm angeordnet, dessen Mindestlänge vom Durchmesser des Vorderreifens des Schleppfahrrads abhängt. Der kurze Arm ist so lang, dass er einen Anschlag für das Vorderrad, oder bevorzugter Weise für den Vorderreifen, bildet, sodass das Vorderrad seitlich festgelegt ist. Da das Vorderrad den kurzen Arm im Falle eines unbeabsichtigten Verdrehens ohnehin zuerst im Bereich der Gabelbasis berührt, kann dieser Arm verhältnismäßig kurz gehalten und dadurch das Gesamtgewicht der Vorrichtung reduziert werden. Übersteigt die Länge des den Nabenhalter umfassenden Gabelarms die Länge des anderen Gabelarms um wenigstens das Doppelte, kann diese erfindungsgemäße Wirkung für ein großes Spektrum an Reifendurchmessern sichergestellt werden.

Um ein Verkippen des Vorderrads des Schlepprads quer zur Fahrtrichtung zu verhindern, kann die Gabel auf ihrer dem Vorderrad des Schleppfahrrads zugewandten Seite Anschlagsplatten zum seitlichen Festlegen des Vorderrades des Schleppfahrrads aufweisen. Auch wenn die erfindungsgemäße Wirkung der Vorrichtung sich bereits dann ergibt, wenn die Gabel im Bereich der Reifenauflage einen flachen Querschnitt aufweist, kann eine solche flache Gabel aufgrund ihrer Geometrie eventuell keine durch seitliches Verkippen hervorgerufenen Kräfte dergestalt aufnehmen, dass das Verkippen vollständig unterbunden und eine Beschädigung des Vorderrades des Schleppfahrrads vermieden wird. Die Anschlagplatten weisen aber Kontaktflächen auf, die von der Gabel aufragen, wodurch solche Kräfte großflächiger aufgenommen und in die Vorrichtung eingeleitet werden können, ohne dass das Schleppfahrad kippt.

Um das Schleppfahrrad auch beim Schleppen so vom Zugfahrrad zu beabstanden, dass die Verwendung des Gepäckträgers bzw. eines eventuell vorhandenen Kindersitzes am Zugfahrrad nicht beeinträchtig wird, wird vorgeschlagen, dass ein Gabelarm der Gabel auf der dem Nabenhalter gegenüberliegenden Seite an einem über die Reifenauflage hinaus verlängerten Endabschnitt mit der Rahmenbefestigung verbunden ist. Zufolge dieser Maßnahmen wird der Abstand zwischen Vorderrad des Schleppfahrrades und dem Zugfahrrad von den Dimensionen des verlängerten Endabschnitts mitbestimmt. So kann auf konstruktiv einfache Weise verhindert werden, dass die Lenkstange oder andere Teile des Schleppfahrrades beim Schleppen unmittelbar im Bereich des Gepäckträgers bzw. Kindersitzes angeordnet sind. Weiters wird der Bereich, in dem das Vorderrad des Schleppfahrrads gelagert ist, räumlich von der Rahmenbefestigung getrennt, was eine einfachere Zugänglichkeit zu beiden bewirkt.

Um die Vorrichtung bei unbeeinträchtigter Funktionsweise einfach an verschiedene Reifendurchmesser des Schleppfahrrads anzupassen, wird vorgeschlagen, dass der Nabenhalter eine Längsführung aufweist, in der der Nabenanschlag verschieb- und festlegbar gelagert ist. Dadurch kann der Abstand zwischen Nabenanschlag und Reifenauflage variiert werden, wodurch Reifen unterschiedlicher Durchmesser effektiv festgelegt werden können. Weiters kann optional der Nabenhalter nachdem er die Vorderradnabe des Schleppfahrrads hintergreift, weiter in Richtung Reifenauflage gedrückt werden bevor er festgelegt wird. So kann die auf das Vorderrad ausgeübte Festlegekraft unabhängig vom Reifendurchmesser, des Gewichts des Schleppfahrrads, den Fahrbedingungen etc. angepasst werden. In einer besonders einfachen Ausführungsform kann der Nabenhalter ein Langloch aufweisen, entlang dessen der Nabenanschlag verschiebbar und festlegbar gelagert ist.

Die Erfindung betrifft auch ein Zugfahrrad mit einer erfindungsgemäßen Vorrichtung, bei der die Rahmenbefestigung mit der Kettenstrebe verbunden ist. Dies ermöglicht eine einfache Befestigung der Vorrichtung bei gleichzeitig niedrigem Schwerpunkt des Schleppfahrrades beim Schleppen. Durch die längliche Geometrie der Kettenstrebe kann die Vorrichtung einfach an wenigstens zwei Punkten der Kettenstrebe befestigt werden, ohne dass beim Schleppen auftretende hohe Drehmomente die Vorrichtung mechanisch stark belasten.

Besonders einfache Montagebedingungen ergeben sich, wenn die Rahmenbefestigung mit der Ständeraufnahme der Kettenstrebe verbunden ist. Da solche Hinterradständeraufnahmen in der Regel standardisiert sind, wie beispielsweise bei KSA 40- oder KSA 18-Ständeraufnahmen, muss die Rahmenbefestigung nicht an eine Vielzahl an Radtypen angepasst werden, sondern kann beispielsweise einfach in die standardisierten Bohrungen der Ständeraufnahme eingreifen und dort auch zusätzlich zum Fahrradständer montiert werden.

Die Fahrsicherheit kann mit konstruktiv einfachen Mitteln weiter erhöht werden, indem der Träger parallel zur Kettenstrebe verläuft. Zufolge dieser Maßnahmen sind die Festlegekräfte auf das Vorderrad des Schleppfahrrades in und gegen die Fahrtrichtung im Kräftegleichgewicht, wenn die Schleppgeschwindigkeit konstant ist. Dies verringert die Wahrscheinlichkeit, dass sich die Festlegung des Vorderrads beispielsweise bei Bodenunebenheiten löst oder schwächt. Weiters wird so ein relativ niedriger Schwerpunkt des Schleppfahrrads ermöglicht, was neben der erhöhten Fahrsicherheit auch den Fahrkomfort für den Fahrer des Zugfahrrads erhöht. Weiters ermöglicht dies eine einfache Befestigung der Vorrichtung am Zugfahrrad, insbesondere dann, wenn die Rahmenbefestigung an einem über die Reifenauflage hinaus verlängerten Endabschnitt eines Gabelarms des Trägers angeordnet ist.

In der Zeichnung ist der Erfindungsgegenstand beispielsweise dargestellt. Es zeigen
- Fig. 1: eine Seitenansicht eines Zugfahrrads mit einer erfindungsgemäßen Vorrichtung, welches ein Kinderfahrrad als Schleppfahrrad schleppt,
- Fig. 2: eine Teilansicht der Fig. 1 mit dem Hinterrad des Zugfahrrads, der erfindungsgemäßen Vorrichtung und dem Vorderrad des Schleppfahrrads in vergrößertem Maßstab und
- Fig. 3: eine Draufsicht auf eine erfindungsgemäße Vorrichtung mit festgelegtem Vorderrad des Schleppfahrrads in noch größerem Maßstab.

Eine erfindungsgemäße Vorrichtung zum Schleppen eines Schleppfahrrads mit einem Zugfahrrad umfasst eine Rahmenbefestigung 1, mit der die Vorrichtung am Zugfahrrad befestigt werden kann und einen mit der Rahmenbefestigung 1 verbundenen Träger 2. Mittels der Rahmenbefestigung 1 werden die Bewegungen des Zugfahrrads in die Vorrichtung ein- und über diese an das Schleppfahrrad weitergeleitet. Der Träger 2 weist weiters eine Reifenauflage 3 und einen Nabenhalter 4 für die Vorderradnabe des Schleppfahrrads auf, zwischen denen der Vorderreifen des Schleppfahrrads festgelegt wird. Um diese Festlegung zu bewerkstelligen, wird das Vorderrad so am Träger 2 angeordnet, dass der Vorderreifen des Vorderrads auf der Reifenauflage 3 aufliegt und die Vorderradnabe auf einer Nabenauflage 5 des Trägers aufliegt Abhängig vom Material des Vorderreifens und seiner Befüllung liegt der Vorderreifen dabei nicht nur auf, sondern kann im Bereich der Reifenauflage 3 mehr oder weniger stark elastisch zusammengedrückt werden und eine Gegenkraft auf die Reifenauflage 3 ausüben, die die Festlegeposition weiter stabilisiertWeiters wird die Vorderradnabe auf ihrer der Reifenauflage 3 abgewandten Seite von einem Nabenanschlag 6, der ebenfalls Teil des Nabenhalters 4 ist, hintergriffen. Zum Schleppen wird also das Vorderrad des Zugfahrrades angehoben und am Träger angeordnet, wobei die Reifenauflage 3 einen Anschlag für Kräfte gegen die Fahrtrichtung bildet, die Nabenauflage 5 verhindert, dass das Vorderrad den Boden berührt und der Nabenanschlag 6 einen Anschlag für Kräfte in die Fahrtrichtung bildet. Aufgrund der Schwerkraft und seiner runden Form wird das Vorderrad bei passender Beabstandung von Nabenanschlag 6 und Reifenauflage 3 dadurch bereits im Träger festgelegt und zwar ohne dass das Schleppfahrrad mechanisch modifiziert werden muss. Zufolge dieser Maßnahmen kann das Schleppfahrrad einer Richtungsänderung des Zugfahrrads automatisch folgen, da nur das Vorderrad, aber nicht die Lenkung festgelegt ist.

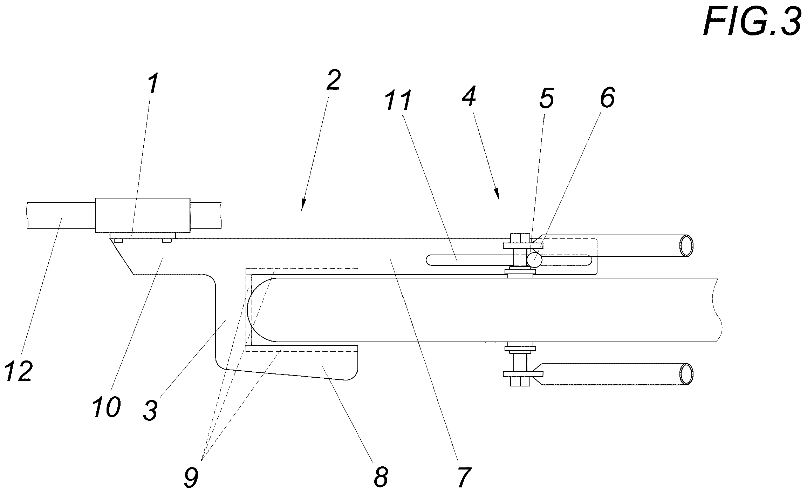

Diese Festlegekräfte reichen eventuell nicht aus, um das Vorderrad des Schleppfahrrades daran zu hindern, sich aufgrund der Fahrbedingungen zu Lösen und zu verrutschen. Der Träger 2 kann im Bereich der Reifenauflage 3 jedoch eine Gabel bilden, wodurch das Vorderrad auch seitlich festgelegt wird, da die Gabelarme 7, 8 quer zur Fahrtrichtung einen Anschlag für das Vorderrad bilden. Dazu genügt es, dass der Träger 2 im Bereich der Reifenauflage 3 eine Gabel bildet, da dort im Bereich des Vorderreifens die auf das Vorderrad wirkenden Momente am höchsten sind. Wie in der Fig. 3 ersichtlich, wird die Länge eines Gabelarms 7 durch den benötigten Abstand zwischen Reifenauflage 3 und Nabenanschlag 6 vorgegeben, weswegen dieser Gabelarm 7 in der gezeigten Ausführungsform länger ist als der zweite Gabelarm 8, der nur die vom Vorderrad wirkenden Momente aufnehmen muss und daher kürzer ausgeführt sein kann. Prinzipiell kann das Vorderrad des Schleppfahrrads so festgelegt werden, dass es dadurch auch gegen ein Umkippen gesichert ist. Da zu hohe Festlegekräfte sich allerdings negativ auf das Vorderrad auswirken können, kann das Vorderrad gegen diese Kippkräfte auch durch Anschlagsplatten 9 gesichert werden, die auf der dem Vorderrad des Schleppfahrrads zugewandten Seite der Gabel angeordnet sind. Diese Anschlagplatten können auf das Schleppfahrrad wirkende Kippkräfte großflächiger aufnehmen und in die Vorrichtung leiten.

Ein Gabelarm 7 der Gabel kann einen auf der dem Nabenhalter 4 gegenüberliegenden Seite über die Reifenauflage 3 hinaus verlängerten Endabschnitt 10 aufweisen, der mit der Rahmenbefestigung 1 verbunden ist. Mit diesem Endabschnitt 10 ist die Rahmenbefestigung 1 von der Reifenauflage 3 beabstandet, wodurch die Rahmenbefestigung 1 einfacher zugänglich ist. Außerdem kann über diese Beabstandung die Distanz zwischen Vorderrad des Schleppfahrrads und einem eventuell vorhandenen Gepäckträger, Kindersitz, etc. auf dem Zugfahrrad erhöht und dadurch dessen Zugänglichkeit bzw. Benutzbarkeit ebenso erleichtert werden.

Der Nabenhalter 4 kann eine Längsführung 11 aufweisen, in der der Nabenanschlag 6 verschieb- und festlegbar gelagert ist. Dies ermöglicht einerseits eine Anpassung der Vorrichtung auf unterschiedliche Reifendurchmesser des Schleppfahrrads und erlaubt andererseits eine Justierung der Festlegekräfte. Der Nabenanschlag 6 kann nämlich, nachdem der die Vorderradnabe des Schleppfahrrads hintergreift, weiter in Richtung der Reifenauflage 3 geschoben und erst dann festgelegt werden, wenn die gewünschte Festlegekraft erreicht wird. In der gezeigten Ausführungsform ist die Längsführung ein Langloch, wie in der Fig. 3 gezeigt.

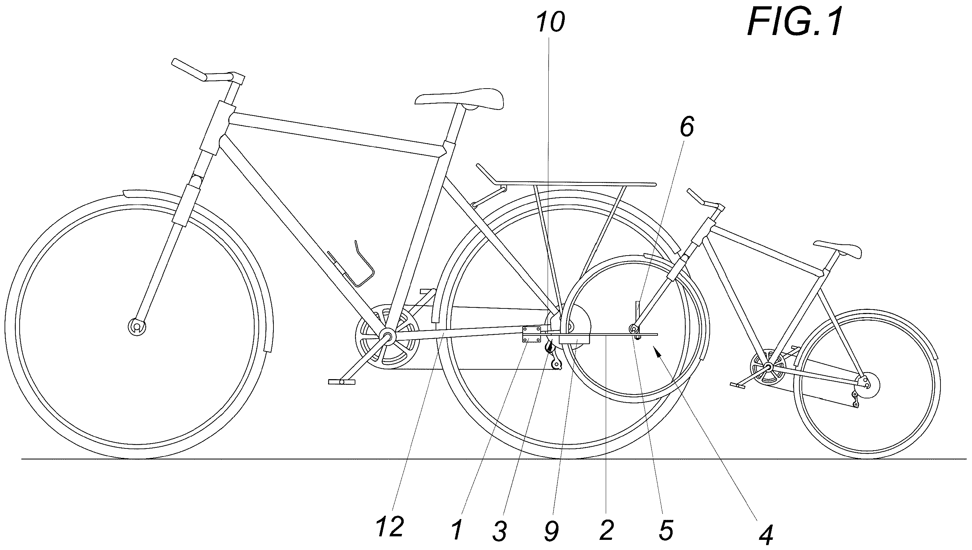

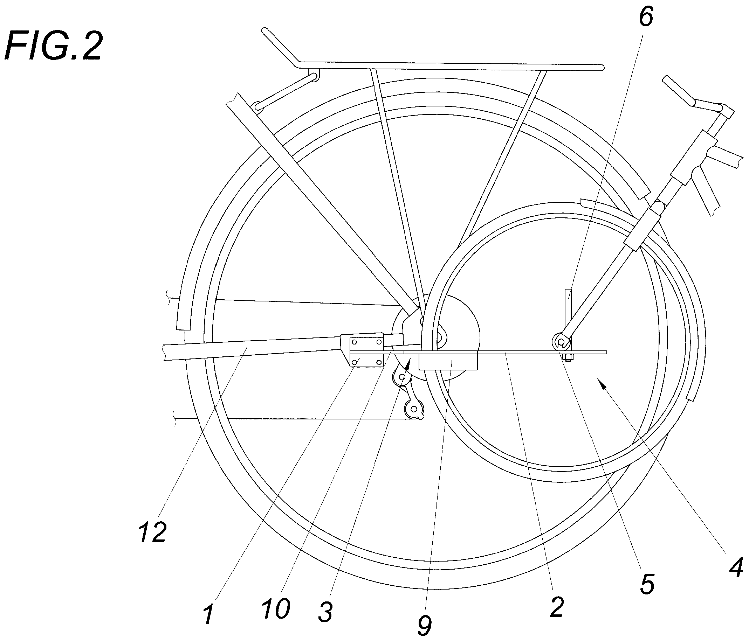

Die Rahmenbefestigung 1 wird bevorzugter Weise mit der Kettenstrebe 12 des Zugfahrrads verbunden, wie in den Figs. 1 und 2 ersichtlich ist. Dadurch kann die Vorrichtung auf einfache Weise so am Zugfahrrad angeordnet werden, dass sich die Vorderradnabe des Schleppfahrrads auf gleicher Höhe der Hinterradnabe des Zugfahrrads befindet, was sich positiv auf das Fahrverhalten beim Schleppen auswirkt. Dazu kann die Rahmenbefestigung bevorzugter Weise so beschaffen sein, dass sie an der Ständeraufnahme der Kettenstrebe 12 befestigt werden kann. Wird der Träger 2 wie gezeigt parallel zur Kettenstrebe 12 angeordnet, ergibt sich eine besonders stabile Anordnung des Vorderrades des Schleppfahrrads beim Schleppen.

## Patentansprüche

1. Vorrichtung zum Schleppen eines Schleppfahrrads mit einem Zugfahrrad, umfassend eine Rahmenbefestigung (1) für das Zugfahrrad und einen mit der Rahmenbefestigung (1) verbundenen Träger (2), der einen Nabenhalter (4) für die Vorderradnabe des Schleppfahrrads umfasst, **dadurch gekennzeichnet, dass** der Träger (2) eine Reifenauflage (3) für den Reifen des Vorderrades des Schleppfahrrads bildet und der Nabenhalter (4) eine Nabenauflage (5) für die Vorderradnabe und einen die Vorderradnabe auf der der Reifenauflage (3) abgewandten Seite hintergreifenden Nabenanschlag (6) umfasst.

2. Vorrichtung nach Anspruch 1, **dadurch gekennzeichnet, dass** der Träger (2) im Bereich der Reifenauflage (3) eine Gabel zum seitlichen Festlegen des Vorderrades des Schleppfahrrads bildet.

3. Vorrichtung nach Anspruch 2, **dadurch gekennzeichnet, dass** die Gabel zwei Gabelarme (7, 8) aufweist, wobei die Länge des den Nabenhalter (4) umfassenden Gabelarms (7) die Länge des anderen Gabelarms (8) um wenigstens das Doppelte übersteigt.

4. Vorrichtung nach Anspruch 2 oder 3, **dadurch gekennzeichnet, dass** die Gabel auf ihrer dem Vorderrad des Schleppfahrrads zugewandten Seite Anschlagsplatten (9) zum seitlichen Festlegen des Vorderrades des Schleppfahrrads aufweist.

5. Vorrichtung nach einem der Ansprüche 2 bis 4, **dadurch gekennzeichnet, dass** ein Gabelarm (7) der Gabel auf der dem Nabenhalter (4) gegenüberliegenden Seite an einem über die Reifenauflage (3) hinaus verlängerten Endabschnitt (10) mit der Rahmenbefestigung (1) verbunden ist.

6. Vorrichtung nach einem der Ansprüche 1 bis 5, **dadurch gekennzeichnet, dass** der Nabenhalter (4) eine Längsführung (11) aufweist, in der der Nabenanschlag (6) verschieb- und festlegbar gelagert ist.

7. Zugfahrrad mit einer Vorrichtung nach einem der vorangegangenen Ansprüche, **dadurch gekennzeichnet, dass** die Rahmenbefestigung (1) mit der Kettenstrebe (12) verbunden ist.

8. Zugfahrrad nach Anspruch 7, **dadurch gekennzeichnet, dass** die Rahmenbefestigung (1) mit der Ständeraufnahme der Kettenstrebe (12) verbunden ist.

9. Zugfahrrad nach einem der Ansprüche 7 oder 8, **dadurch gekennzeichnet, dass** der Träger (2) parallel zur Kettenstrebe (12) verläuft.

## Claims

1. Device for towing a trailer bicycle with a towing bicycle, comprising a frame attachment (1) for the towing bicycle and a carrier (2) connected to the frame attachment (1), which carrier (2) comprises a hub holder (4) for the front wheel hub of the trailer bicycle, **characterized in that** that the carrier (2) forms a tyre support (3) for the tyre of the front wheel of the trailer bicycle and the hub holder (4) comprises a hub support (5) for the front wheel hub and a hub stop (6) gripping behind the front wheel hub on the side facing away from the tyre support (3).

2. Device according to claim 1, **characterized in that** the carrier (2) forms a fork in the area of the tyre support (3) for the lateral securing of the front wheel of the trailer bicycle.

3. Device according to claim 2, **characterized in that** the fork has two fork arms (7, 8), the length of the fork arm (7) encompassing the hub holder (4) exceeding the length of the other fork arm (8) by at least double.

4. Device according to claim 2 or 3, **characterized in that** the fork has stop plates (9) on its side facing the front wheel of the trailer bicycle for the lateral fixing of the front wheel of the trailer bicycle.

5. Device according to one of claims 2 to 4, **characterized in that** a fork arm (7) of the fork is connected to the frame attachment (1) at an end section (10) extended beyond the tyre support (3) on the side opposite the hub holder (4).

6. Device according to one of claims 1 to 5, **characterized in that** the hub holder (4) has a longitudinal guide (11) in which the hub stop (6) is displaceably and fixably mounted.

7. Towing bicycle with a device according to one of the preceding claims, **characterized in that** the frame attachment (1) is connected to the chain stay (12).

8. Towing bicycle according to claim 7, **characterized in that** the frame attachment (1) is connected to the stand receiver of the chain stay (12).

9. Towing bicycle according to one of claims 7 or 8, **characterized in that** the carrier (2) extends parallel to the chain stay (12).

## Revendications

1. Dispositif destiné à remorquer une bicyclette de remorquage avec une bicyclette de traction, comprenant une fixation de cadre (1) pour la bicyclette de traction et un support (2) relié à la fixation de cadre (1) qui comprend un moyen de retenue de moyeu (4) pour le moyeu de roue avant de la bicyclette de remorquage, **caractérisé en ce que** le support (2) forme une surface d'appui de pneu (3) pour le pneu de la roue avant de la bicyclette de remorquage et le moyen de retenue de moyeu (4) comprend une surface d'appui de moyeu (5) pour le moyeu de roue avant et une butée de moyeu (6) qui s'engage derrière le moyeu de roue avant sur le côté opposé à la surface d'appui de pneu (3).

2. Dispositif selon la revendication 1, **caractérisé en ce que** le support (2) forme, dans la région de la surface d'appui de pneu (3), une fourche pour fixer latéralement la roue avant de la bicyclette de remorquage.

3. Dispositif selon la revendication 2, **caractérisé en ce que** la fourche présente deux bras de fourche (7, 8), dans lequel la longueur du bras de fourche (7) comprenant le moyen de retenue de moyeu (4) représente au moins le double de la longueur de l'autre bras de fourche (8).

4. Dispositif selon la revendication 2 ou 3, **caractérisé en ce que** la fourche présente, sur son côté en regard de la roue avant de la bicyclette de remorquage, des plaques de butée (9) pour fixer latéralement la roue avant de la bicyclette de remorquage.

5. Dispositif selon une des revendications 2 à 4, **caractérisé en ce qu'**un bras de fourche (7) de la fourche est relié à la fixation de cadre (1) sur le côté opposé au moyen de retenue de moyeu (4) au niveau d'une section d'extrémité (10) s'étendant au-delà de la surface d'appui de pneu (3).

6. Dispositif selon une des revendications 1 à 5, **caractérisé en ce que** le moyen de retenue de moyeu (4) présente un guidage longitudinal (11) dans lequel la butée de moyeu (6) est montée de manière à pouvoir être fixée et à pouvoir se déplacer.

7. Bicyclette de traction avec un dispositif selon une des revendications précédentes, **caractérisée en ce que** la fixation de cadre (1) est reliée à la base (12).

8. Bicyclette de traction selon la revendication 7, **caractérisée en ce que** la fixation de cadre (1) est reliée au logement de béquille de la base (12).

9. Bicyclette de traction selon une des revendications 7 ou 8, **caractérisé en ce que** le support (2) s'étend parallèlement à la base (12).
